# EUROPEAN PATENT SPECIFICATION

(11) **EP 3 221 784 B1**
(45) Date of publication and mention of the grant of the patent: **22.08.2018**
(21) Application number: 15793971.1
(22) Date of filing: 27.10.2015
(51) Int. Cl.: G06F 9/38

(54) **PROVIDING LOOP-INVARIANT VALUE PREDICTION USING A PREDICTED VALUES TABLE, AND RELATED APPARATUSES, METHODS, AND COMPUTER-READABLE MEDIA**
BEREITSTELLUNG VON LOOP-INVARIANTER WERTVORHERSAGE UNTER VERWENDUNG EINER VORHERGESAGTEN WERTETABELLE UND ENTSPRECHENDE VORRICHTUNGEN, VERFAHREN UND COMPUTERLESBARE MEDIEN
FOURNITURE DE PRÉDICTION DE VALEUR INVARIANTE DE BOUCLE À L'AIDE D'UNE TABLE DE VALEURS PRÉDITES, ET APPAREILS, PROCÉDÉS CORRESPONDANTS ET SUPPORTS LISIBLE PAR ORDINATEUR

(30) Priority: 18.11.2014 US 201414546243
(43) Date of publication of application: 27.09.2017
(73) Proprietor: Qualcomm Incorporated, San Diego, CA 92121-1714 (US)
(72) Inventor: SRIKANTAIAH, Shekhar, Shashi, San Diego, California 92121 (US)
(74) Representative: Tomkins & Co
(86) International application number: PCT/US2015/057473
(87) International publication number: WO 2016/081163

(56) References cited:
- US-A1- 2008 022 080
- US-B1- 7 856 548
- LIPASTI M H ET AL: "VALUE LOCALITY AND LOAD VALUE PREDICTION", 7TH. INTERNATIONAL CONFERENCE ON ARCHITECTURAL SUPPORT FOR PROGRAMMING LANGUAGES AND OPERATION SYSTEMS. CAMBRIDGE, MA., OCT. 1 - 5, 1996; [INTERNATIONAL CONFERENCE ON ARCHITECTURAL SUPPORT FOR PROGRAMMING LANGUAGES AND OPERATION SYSTEMS (ASPLOS)], NE, vol. CONF. 7, 1 October 1996 (1996-10-01), pages 138-147, XP000681716, DOI: 10.1145/237090.237173 ISBN: 978-0-89791-767-4

## Description

### PRIORITY APPLICATION

The present application claims priority to U.S. Patent Application Serial No. 14/546,243, filed on November 18, 2014, and entitled "PROVIDING LOOP-INVARIANT VALUE PREDICTION USING A PREDICTED VALUES TABLE, AND RELATED APPARATUSES, METHODS, AND COMPUTER-READABLE MEDIA,".

### BACKGROUND

### I. Field of the Disclosure

The technology of the disclosure relates generally to out-of-order processing execution of a computer program by a processor.

### II. Background

Many conventional computer processor cores are capable of optimizing performance by performing what is referred to as "out-of-order" (OOO) processing. In an OOO processor, a dependent instruction that relies on a value generated as input by a producer instruction may be executed as soon as the input for the dependent instruction is available, regardless of the actual program order of the dependent instruction. An OOO processor thus may achieve greater levels of parallel instruction execution, resulting in greater instruction throughput and greater processor performance.

However, performance of an OOO processor may be negatively impacted by producer instructions that have a long latency (i.e., that consume excessive processor cycles in order to generate input for dependent instructions). In such circumstances, the dependent instructions may be prevented from executing, leading to inefficient utilization of processor resources. If the producer and dependent instructions are located within the body of a loop, the negative impact may be exacerbated. Some OOO processors may attempt to mitigate the impact of long latency producer instructions through the use of value prediction mechanisms that enable the dependent instructions to be dispatched in parallel with execution of the producer instructions. A misprediction by such mechanisms, though, may result in a relatively high performance penalty (e.g., requiring the flushing or selective replaying of all recently fetched instructions) that increases with the latency of the long latency producer instructions. Moreover, conventional value prediction mechanisms may have very limited coverage, in that they may operate only with respect to specific instruction types. US 7 856 548 discloses use of a dynamic confidence threshold to predict data values.

### SUMMARY OF THE DISCLOSURE

Aspects disclosed in the detailed description include providing loop-invariant value prediction using a predicted values table. Related apparatuses, methods, and computer-readable media are also disclosed. In this regard, in one aspect, an instruction processing circuit is provided to enable loop-invariant value prediction functionality at run time of computer program instructions. The instruction processing circuit may provide a predicted values table for caching predicted values to be propagated between instructions. The instruction processing circuit may be configured to detect a loop body in an instruction stream. In some aspects, a loop body may be detected by locating a program-counter (PC)-relative branch instruction to a target address that precedes an address of the PC-relative branch instruction. In such aspects, the PC-relative branch instruction represents the end of the loop body, while the target address branched to represents the beginning of the loop body. After detecting the loop body, the instruction processing circuit detects a value-generating instruction within the loop body. The instruction processing circuit then determines whether an attribute (an address, as a non- limiting example) of the value-generating instruction matches an entry of the predicted values table. If the attribute of the value-generating instruction matches the entry of the predicted values table, a counter of the entry may be compared to an iteration threshold by the instruction processing circuit. If the counter of the entry exceeds the iteration threshold, it may be assumed that the value-generating instruction is a "loop-invariant" instruction whose predicted value may change little or not at all over iterations of the loop. The instruction processing circuit thus provides a predicted value stored in the entry of the predicted values table for execution of at least one dependent instruction. In this manner, the predicted value may be propagated to dependent instructions without requiring re-execution of the value-generating instruction, resulting in improved processor performance. In some aspects, if the attribute of the value-generating instruction matches the entry of the predicted values table but the counter of the entry does not exceed the iteration threshold, the counter may be incremented when an actual value generated by execution of the value-generating instruction matches the predicted value of the entry.

In another aspect, an apparatus comprising an instruction processing circuit is provided. The instruction processing circuit is configured to detect a loop body in an instruction stream. The instruction processing circuit is further configured to detect a value-generating instruction within the loop body. The instruction processing circuit is also configured to determine whether an attribute of the value-generating instruction matches an entry of a predicted values table. The instruction processing circuit is additionally configured to, responsive to determining that the attribute of the value-generating instruction matches the entry of the predicted values table, determine whether a counter of the entry exceeds an iteration threshold. The instruction processing circuit is also configured to, responsive to determining that the counter of the entry exceeds the iteration threshold, provide a predicted value in the entry of the predicted values table for execution of at least one dependent instruction.

In another aspect, an apparatus comprising an instruction processing circuit is provided. The instruction processing circuit comprises a means for detecting a loop body in an instruction stream. The instruction processing circuit further comprises a means for detecting a value-generating instruction within the loop body. The instruction processing circuit also comprises a means for determining whether an attribute of the value-generating instruction matches an entry of a predicted values table. The instruction processing circuit additionally comprises a means for determining whether a counter of the entry exceeds an iteration threshold, responsive to determining that the attribute of the value-generating instruction matches the entry of the predicted values table. The instruction processing circuit further comprises a means for providing a predicted value in the entry of the predicted values table for execution of at least one dependent instruction, responsive to determining that the counter of the entry exceeds the iteration threshold.

In another aspect, a method for providing loop-invariant value prediction is provided. The method comprises detecting a loop body in an instruction stream. The method further comprises detecting a value-generating instruction within the loop body. The method also comprises determining whether an attribute of the value-generating instruction matches an entry of a predicted values table. The method additionally comprises, responsive to determining that the attribute of the value-generating instruction matches the entry of the predicted values table, determining whether a counter of the entry exceeds an iteration threshold. The method further comprises, responsive to determining that the counter of the entry exceeds the iteration threshold, providing a predicted value in the entry of the predicted values table for execution of at least one dependent instruction

In another aspect, a non-transitory computer-readable medium having stored thereon computer-executable instructions is provided. The computer-executable instructions cause a processor to detect a loop body in an instruction stream. The computer-executable instructions further cause the processor to detect a value-generating instruction within the loop body. The computer-executable instructions also cause the processor to determine whether an attribute of the value-generating instruction matches an entry of a predicted values table. The computer-executable instructions additionally cause the processor to, responsive to determining that the attribute of the value-generating instruction matches the entry of the predicted values table, determine whether a counter of the entry exceeds an iteration threshold. The computer-executable instructions further cause the processor to, responsive to determining that the counter of the entry exceeds the iteration threshold, provide a predicted value in the entry of the predicted values table for execution of at least one dependent instruction.

### BRIEF DESCRIPTION OF THE FIGURES

Figure 1 is a block diagram of an exemplary computer processor including an instruction processing circuit for providing loop-invariant value prediction using a predicted values table;
Figure 2 is a diagram illustrating exemplary elements of the predicted values table of Figure 1;
Figures 3A-3F illustrate exemplary communications flows for detecting a loop body, generating an entry in the predicted values table of Figure 1, incrementing a counter of the entry, and providing a predicted value of the entry to a dependent instruction by the instruction processing circuit of Figure 1;
Figures 4A-4C are flowcharts illustrating exemplary operations for providing loop-invariant value prediction using the predicted values table of the instruction processing circuit of Figure 1; and
Figure 5 is a block diagram of an exemplary processor-based system that can include the instruction processing circuit of Figure 1.

### DETAILED DESCRIPTION

With reference now to the drawing figures, several exemplary aspects of the present disclosure are described. The word "exemplary" is used herein to mean "serving as an example, instance, or illustration." Any aspect described herein as "exemplary" is not necessarily to be construed as preferred or advantageous over other aspects.

Aspects disclosed in the detailed description include providing loop-invariant value prediction using a predicted values table. Related apparatuses, methods, and computer-readable media are also disclosed. In this regard, in one aspect, an instruction processing circuit is provided to enable loop-invariant value prediction functionality at run time of computer program instructions. The instruction processing circuit may provide a predicted values table for caching predicted values to be propagated between instructions. The instruction processing circuit may be configured to detect a loop body in an instruction stream. In some aspects, a loop body may be detected by locating a program-counter (PC)-relative conditional branch instruction to a target address that precedes an address of the PC-relative conditional branch instruction. In such aspects, the PC-relative conditional branch instruction represents the end of the loop body, while the target address branched to represents the beginning of the loop body. After detecting the loop body, the instruction processing circuit detects a value-generating instruction within the loop body. The instruction processing circuit then determines whether an attribute (an address, as a non-limiting example) of the value-generating instruction matches an entry of the predicted values table. If the attribute of the value-generating instruction matches the entry of the predicted values table, a counter of the entry may be compared to an iteration threshold by the instruction processing circuit. If the counter of the entry exceeds the iteration threshold, it may be assumed that the value-generating instruction is a "loop-invariant" instruction whose predicted value may change little or not at all over iterations of the loop. The instruction processing circuit thus provides a predicted value stored in the entry of the predicted values table for execution of at least one dependent instruction. In this manner, the predicted value may be propagated to dependent instructions without requiring re-execution of the value-generating instruction, resulting in improved processor performance. In some aspects, if the attribute of the value-generating instruction matches the entry of the predicted values table but the counter of the entry does not exceed the iteration threshold, the counter may be incremented when an actual value generated by execution of the value-generating instruction matches the predicted value of the entry.

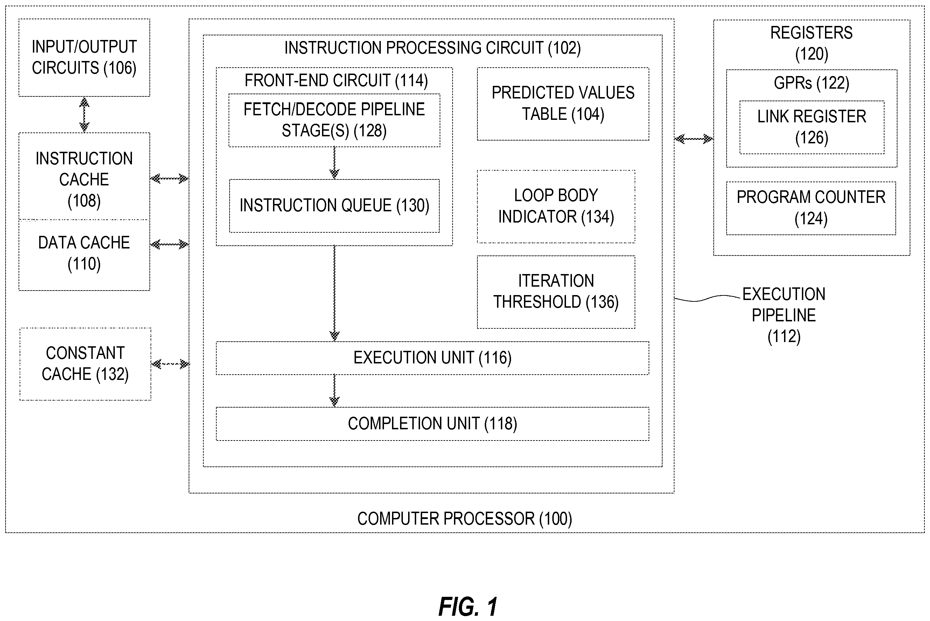

In this regard, Figure 1 is a block diagram of an exemplary computer processor 100. The computer processor 100 includes an instruction processing circuit 102 providing a predicted values table 104 for providing loop-invariant value prediction, as disclosed herein. The computer processor 100 may encompass any one of known digital logic elements, semiconductor circuits, processing cores, and/or memory structures, among other elements, or combinations thereof. Aspects described herein are not restricted to any particular arrangement of elements, and the disclosed techniques may be easily extended to various structures and layouts on semiconductor dies or packages.

The computer processor 100 includes input/output circuits 106, an instruction cache 108, and a data cache 110. The computer processor 100 further comprises an execution pipeline 112, which includes a front-end circuit 114, an execution unit 116, and a completion unit 118. The computer processor 100 additionally includes registers 120, which comprise one or more general purpose registers (GPRs) 122, a program counter 124, and a link register 126. In some aspects, such as those employing the ARM® ARM7™ architecture, the link register 126 is one of the GPRs 122, as shown in Figure 1. Alternately, some aspects, such as those utilizing the IBM® PowerPC® architecture, may provide that the link register 126 is separate from the GPRs 122.

In exemplary operation, the front-end circuit 114 of the execution pipeline 112 fetches instructions (not shown) from the instruction cache 108, which in some aspects may be an on-chip Level 1 (L1) cache, as a non-limiting example. The fetched instructions are decoded by the front-end circuit 114 and issued to the execution unit 116. The execution unit 116 executes the issued instructions, and the completion unit 118 retires the executed instructions. In some aspects, the completion unit 118 may comprise a write-back mechanism (not shown) that stores results of instruction execution in one or more of the registers 120. It is to be understood that the execution unit 116 and/or the completion unit 118 may each comprise one or more sequential pipeline stages. In the example of Figure 1, the front-end circuit 114 comprises one or more fetch/decode pipeline stages 128, which enable multiple instructions to be fetched and decoded concurrently. An instruction queue 130 for holding the fetched instructions pending dispatch to the execution unit 116 is communicatively coupled to one or more of the one or more fetch/decode pipeline stages 128.

Some aspects of the computer processor 100 of Figure 1 may provide an optional constant cache 132 that is communicatively coupled to one or more elements of the execution pipeline 112. The constant cache 132 may provide a quick-access mechanism by which a value previously stored in one of the registers 120 may be provided to an instruction that uses the value as an input operand. The constant cache 132 may thus improve the performance of the computer processor 100 by providing access to stored values more quickly than the registers 120.

The computer processor 100 may provide out-of-order (OOO) processing of instructions to increase instruction processing parallelism. However, as noted above, OOO processing performance may be negatively impacted by long latency producer instructions, which may consume excessive processor cycles in order to generate input for dependent instructions. This may delay the execution of the dependent instructions, and may result in a negative performance impact of the computer processor 100, particularly if the producer and dependent instructions are located within a loop body.

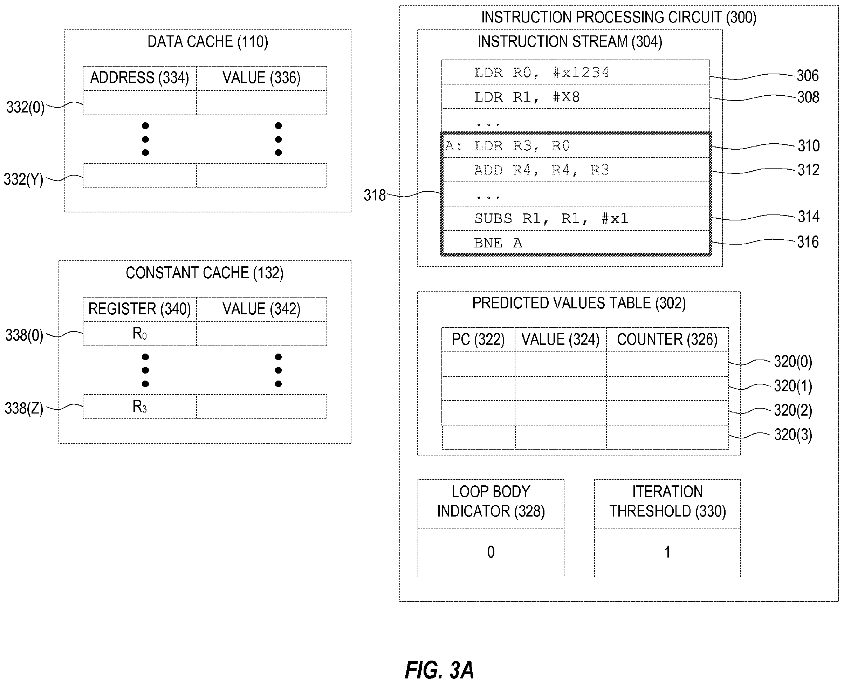

In this regard, the instruction processing circuit 102 of Figure 1 provides the predicted values table 104 for providing loop-invariant value prediction to dependent instructions at run time of computer program instructions. The instruction processing circuit 102 is configured to detect a loop body (not shown) within an instruction stream (not shown) that is processed within the execution pipeline 112. In some aspects, the instruction processing circuit 102 may detect the loop body by detecting a program-counter (PC)-relative conditional branch instruction (not shown) to a target address (not shown) preceding an address of the PC-relative conditional branch instruction. If the PC-relative conditional branch instruction is predicted to be taken, it may be assumed that the PC-relative conditional branch instruction represents the end of a loop body and the target address represent the beginning of the loop body. The instruction processing circuit 102, in some aspects, may employ an optional loop body indicator 134 to track whether instructions being processed are within a loop body. Exemplary operations using the loop body indicator 134 are discussed in greater detail below with respect to Figures 3A-3F.

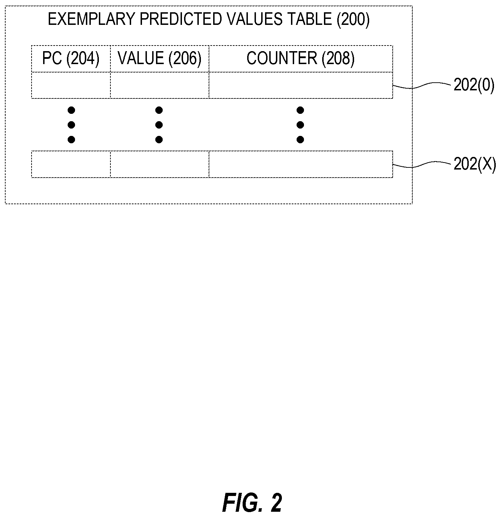

After detecting the loop body, the instruction processing circuit 102 may detect value-generating instructions (not shown) within the loop body that are processed within the execution pipeline 112. In some aspects, the instruction processing circuit 102 may be configured to detect any instruction that generates or retrieves a value as a "value-generating instruction." As each value-generating instruction is fetched by the front-end circuit 114 of the instruction processing circuit 102, the instruction processing circuit 102 consults the predicted values table 104. The predicted values table 104 contains one or more entries (not shown). Each entry may include an attribute of a previously-detected value-generating instruction, and a predicted value that was previously generated by the value-generating instruction corresponding to the attribute. Some aspects may provide that the attribute comprises an address of the value-generating instruction and/or an index of the value-generating instruction, as non-limiting examples. Each entry may also include a counter indicative of a number of loop iterations in which the predicted value has matched an actual value generated by the value-generating instruction. Thus, in some aspects, the greater the counter value, the greater the confidence that the value-generating instruction is a loop-invariant instruction whose generated value may vary little or not at all within the loop body. Exemplary elements of the predicted values table 104 are discussed in greater detail below with respect to Figure 2.

The instruction processing circuit 102 determines whether an attribute of the value-generating instruction being fetched matches an entry of the predicted values table 104. According to some aspects disclosed herein, the instruction processing circuit 102 may be configured to further determine whether the counter value for the entry exceeds an iteration threshold 136 that is tracked by the instruction processing circuit 102. If so (i.e., a "hit"), the instruction processing circuit 102 provides the predicted value from the entry to at least one dependent instruction. In aspects wherein the computer processor 100 includes the optional constant cache 132, the instruction processing circuit 102 may provide the predicted value to the at least one dependent instruction via the constant cache 132 (e.g., writing the predicted value to the constant cache 132). In this manner, the instruction processing circuit 102 may leverage existing functionality of the constant cache 132 to provide the predicted value to the at least one dependent instruction, thus avoiding the need to implement an additional communications path. The at least one dependent instruction may thus obtain the predicted value for the value-generating instruction without requiring the value-generating instruction to be reexecuted.

In some aspects, the instruction processing circuit 102 may determine that the attribute of the value-generating instruction matches the entry of the predicted values table 104, but the counter of the entry does not exceed the iteration threshold 136. In such aspects, the instruction processing circuit 102 may determine whether an actual value generated by execution of the value-generating instruction matches the predicted value of the entry. If so, the counter of the entry for the value-generating instruction may be incremented. If the actual value generated by execution of the value-generating instruction does not match the predicted value of the entry, the instruction processing circuit 102 may invalidate the entry.

According to some aspects disclosed herein, if the instruction processing circuit 102 detects the value-generating instruction but does not find the attribute of the value-generating instruction in an entry of the predicted values table 104, a "miss" occurs. In this case, the instruction processing circuit 102 may generate an entry in the predicted values table 104 corresponding to the value-generating instruction upon execution of the value-generating instruction. The generated entry includes the attribute of the value-generating instruction, and stores an actual value generated by the value-generating instruction as the predicted value of the entry. In some aspects, the counter for the generated entry may be initialized (e.g., to a value of zero). If and when the value-generating instruction is again detected by the instruction processing circuit 102, a "hit" in the predicted values table 104 may occur.

Figure 2 illustrates an exemplary predicted values table 200 that may represent an aspect of the predicted values table 104 of Figure 1. Elements of Figure 1 are referenced for the sake of clarity in describing Figure 2. As seen in Figure 2, the predicted values table 200 includes multiple entries 202(0)-202(X). Each entry 202(0)-202(X) includes a program counter (PC) field 204, which represents an attribute of a value-generating instruction previously detected by the instruction processing circuit 102 of Figure 1. In some aspects, the PC field 204 may store the attribute comprising a physical address of the value-generating instruction, while some aspects may provide that the PC field 204 stores the attribute comprising a virtual address of the value-generating instruction. In the latter case, the instruction processing circuit 102 may include additional logic (not shown) in order to invalidate one or more of the entries 202(0)-202(X) when a mapping of a virtual address to a physical address changes. According to some aspects disclosed herein, the PC field 204 may store only a subset of bits constituting the attribute of the value-generating instruction. Some aspects may provide that the attribute of the value-generating instruction comprises a physical register number of the value-generating instruction and/or a sequence number of the value-generating instruction.

Each of the entries 202(0)-202(X) also includes a value field 206. The value field 206 stores an actual value that is generated upon execution of the value-generating instruction. Upon subsequent detection of the value-generating instruction, the instruction processing circuit 102 may provide contents of the value field 206 as a predicted value to a dependent instruction. In some aspects, a size of the value field 206 may be smaller than a largest size of a constant value supported by the computer processor 100 to save processor area. As a non-limiting example, the computer processor 100 may support 64-bit constants, while the value field 206 may store only the lower 32 bits of a predicted value. In aspects in which most predicted values are comprised of 32 or fewer significant bits, the use of a smaller value field 206 may provide space and/or power savings with little to no impact on functionality of the predicted values table 200.

Each of the entries 202(0)-202(X) of the predicted values table 200 also includes a counter 208. In some aspects, the counter 208 may be initialized (e.g., set to a value of zero) when the corresponding entry 202(0)-202(X) is generated by the instruction processing circuit 102 of Figure 1. As the value-generating instruction associated with each of the entries 202(0)-202(X) is detected and executed, the corresponding counter 208 may be incremented each time an actual value generated by the value-generating instruction matches the value field 206 of the entry 202(0)-202(X). If the value of the counter 208 exceeds the iteration threshold 136 of Figure 1, the instruction processing circuit 102 may then provide the predicted value in the value field 206 as a predicted value for the value-generating instruction.

It is to be understood that some aspects may provide that the entries 202(0)-202(X) of the predicted values table 200 may include other fields in addition to the fields 204, 206, and 208 illustrated in Figure 2. As a non-limiting example, the entries 202(0)-202(X) may include one or more valid bits (not shown) indicative of a validity of the entries 202(0)-202(X) and/or of the constituent elements thereof. It is to be further understood that the predicted values table 200 in some aspects may be implemented as a cache configured according to associativity and replacement policies known in the art. In the example of Figure 2, the predicted values table 200 is illustrated as a single data structure. However, in some aspects, the predicted values table 200 may also comprise more than one data structure or cache.

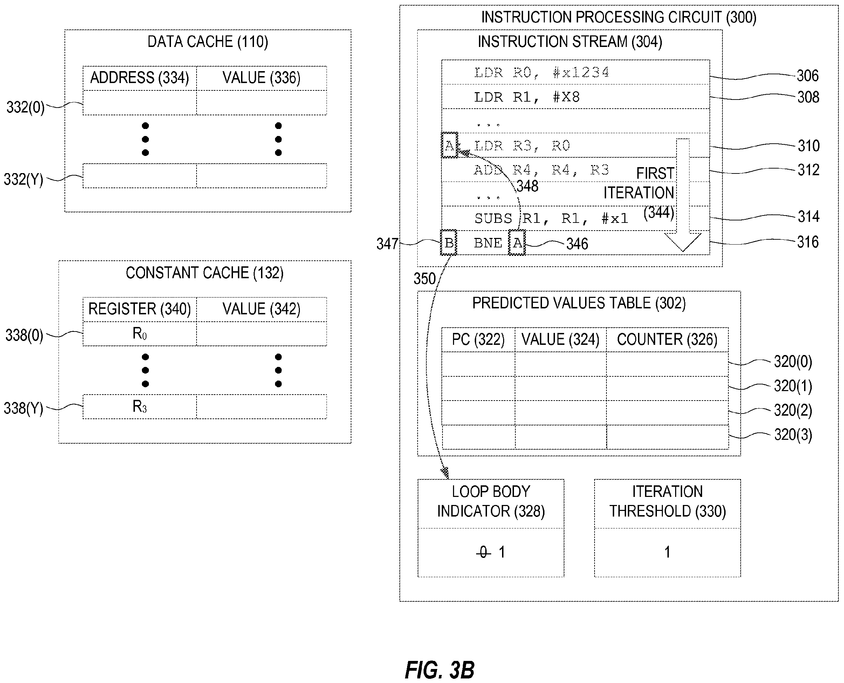

To better illustrate exemplary communications flows between the instruction processing circuit 102 and the predicted values table 104 of Figure 1, Figures 3A-3F are provided. Figure 3A provides an overview of elements of an instruction processing circuit 300, which corresponds to one aspect of the instruction processing circuit 102 of Figure 1. Figures 3B-3F then illustrate exemplary communications flows for detecting a loop body, generating an predicted values table entry, incrementing a counter for a predicted values table entry, and providing a predicted value for a dependent instruction. For the sake of clarity, elements of Figure 1 are referred to in describing Figures 3A-3F.

As seen in Figure 3A, the instruction processing circuit 300 includes the predicted values table 302. The instruction processing circuit 300 in this example processes an instruction stream 304, which comprises instructions 306, 308, 310, 312, 314, and 316. For the sake of illustration, the instructions 306, 308, 310, 312, 314, and 316 are reproduced below, with a brief comment regarding the operation of each:

| | |
|---|---|
| LDR R0, #x1234 | (306; loads hexadecimal value 1234 into register R0) |
| LDR R1, #x8 | (308; loads hexadecimal value 8 into register R1) |
| ... | (optional intervening instructions) |
| A: LDR R3, R0 | (310; at address A, loads value of R0 into register R3) |
| ADD R4, R4, R3 | (312; adds value of R3 to register R4 and stores in R4) |
| ... | (optional intervening instructions) |
| SUBS R1, R1, #x1 | (314; decrements value in R1) |
| BNE A | (316; if R1 is not zero, branch back to address A) |

As seen in Figure 3A, the instructions 310, 312, 314, and 316 are thus included in a loop body 318. A loop executes a total of eight times as determined by the value in register R1, and repeatedly loads register R3 with a value from register R0, and adds the value from register R3 to register R4. Note that, in the instructions 306, 308, 310, 312, 314, and 316 shown, the value loaded into register R3 does not change within the body of the loop. Because the instruction 310 produces a value to be stored in register R3, the instruction 310 may be referred to herein as the "value-generating instruction 310" herein. Similarly, because the instruction 312 uses the value generated by the instruction 310 as input, the instruction 312 may be referred to as the "dependent instruction 312." The instruction 316 comprises a PC-relative conditional branch instruction, and thus may be referred to herein as the "PC-relative conditional branch instruction 316."

The predicted values table 302 illustrated in Figure 3A includes entries 320(0)-320(3). To facilitate propagation of predicted values, each entry 320(0)-320(3) of the predicted values table 302 includes a program counter (PC) field 322, a value field 324, and a counter 326. The PC field 322 for each entry 320(0)-320(3) may be used to store an attribute comprising an address of a value-generating instruction that is detected by the instruction processing circuit 300. The value field 324 may store a predicted value generated by the value-generating instruction associated with the attribute in the PC field 322. Likewise, the counter 326 may store a loop iteration counter value reflecting the number of times that the value-generating instruction associated with the attribute in the PC field 322 has generated the predicted value stored in the value field 324. It is to be understood that, although the predicted values table 302 of Figure 3A includes four entries 320(0)-320(3), the predicted values table 302 in some aspects may include more or fewer entries.

The instruction processing circuit 300 also includes a loop body indicator 328 and an iteration threshold 330. The loop body indicator 328, in some aspects, may be used by the instruction processing circuit 300 to determine whether the instructions currently being fetched are within the loop body 318. The iteration threshold 330 may reflect a threshold value indicating how many loop iterations in which a value-generating instruction may be required to generate the same value before it is considered to be loop-invariant. In the example of Figure 3A, the loop body indicator 328 is cleared, and the iteration threshold 330 is set to a value of one (1).

As seen in Figure 3A, the data cache 110 (corresponding to the data cache 110 of Figure 1) is made up of entries 332(0)-332(Y), each comprising an address field 334 and a value field 336. Each of the entries 332(0)-332(Y) corresponds to a value generated during a previous execution of a value-generating instruction. In this regard, the address field 334 stores an address of the previously generated value, while the value field 336 stores a copy of the value.

The constant cache 132 shown in Figure 3A (corresponding to the optional constant cache 132 of Figure 1) comprises entries 338(0)-338(Z). Each of the entries 338(0)-338(Z) includes a register field 340 and a value field 342. The register field 340 of each entry 338(0)-338(Z) indicates one of the registers 120 of Figure 1 associated with the entry 338(0)-338(Z), while the value field 342 indicates a predicted value most recently stored in the corresponding register 120. As discussed above, the constant cache 132 may provide a quick-access mechanism providing speedier access to cached values than loading the values directly from the registers 120. It is to be understood that some aspects of the instruction processing circuit 300 may be configured with a different communications pathway to provide predicted values from the predicted values table 302, and that in such aspects, the constant cache 132 may not be employed.

Referring now to Figure 3B, communications flows in some aspects for detecting the loop body 318 in Figure 3A are illustrated. The instruction processing circuit 300 processes the instruction stream 304 for the first time, and proceeds through a first iteration 344 of the loop. The instruction processing circuit 300 detects that the instruction 316 in the instruction stream 304 is a PC-relative conditional branch instruction, and further that a target address 346 is an address A preceding an address 347 ("B") of the instruction 316, as indicated by arrow 348. Accordingly, the loop body 318 of Figure 3A has been detected, and the instruction processing circuit 300 sets the loop body indicator 328 as indicated by arrow 350.

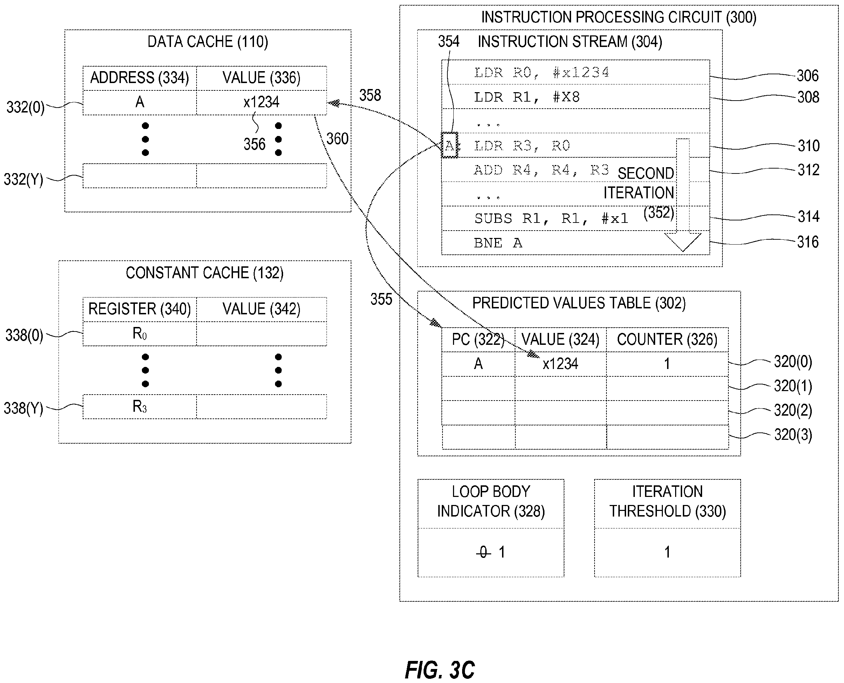

In Figure 3C, the instruction processing circuit 300 proceeds through a second iteration 352 of the loop body 318 of Figure 3A. The value-generating instruction 310 is detected, having an attribute 354 comprising an address A. Because the loop body indicator 328 has previously been set, the instruction processing circuit 300 is aware that the loop body 318 is being processed. Thus, the instruction processing circuit 300 checks the predicted values table 302 to determine whether the attribute 354 of the value-generating instruction 310 (i.e., address A) may be found in any of the entries 320(0)-320(3), as indicated by arrow 355. The instruction processing circuit 300 does not find the attribute 354 in the entries 320(0)-320(3), and thus, in response to the "miss," continues conventional processing of the value-generating instruction 310.

Upon execution of the value-generating instruction 310, the entry 332(0) of the data cache 110 is populated with an actual value 356 loaded by the value-generating instruction 310 (here, the hexadecimal value 1234). As indicated by arrow 358, the instruction processing circuit 300 accesses the entry 332(0) of the data cache 110, and obtains the actual value 356. The instruction processing circuit 300 next generates the entry 320(0) in the predicted values table 302 based on the actual value 356, as indicated by arrow 360. The attribute 354 of the value-generating instruction 310 will be stored in the PC field 322 of the entry 320(0), while the actual value 356 will be stored as a predicted value in the value field 324 of the entry 320(0). The counter 326 for the entry 320(0) is incremented to a value of one (1). The actual value 356 generated by the value-generating instruction 310 is then forwarded to the dependent instruction 312 using conventional mechanisms (not shown).

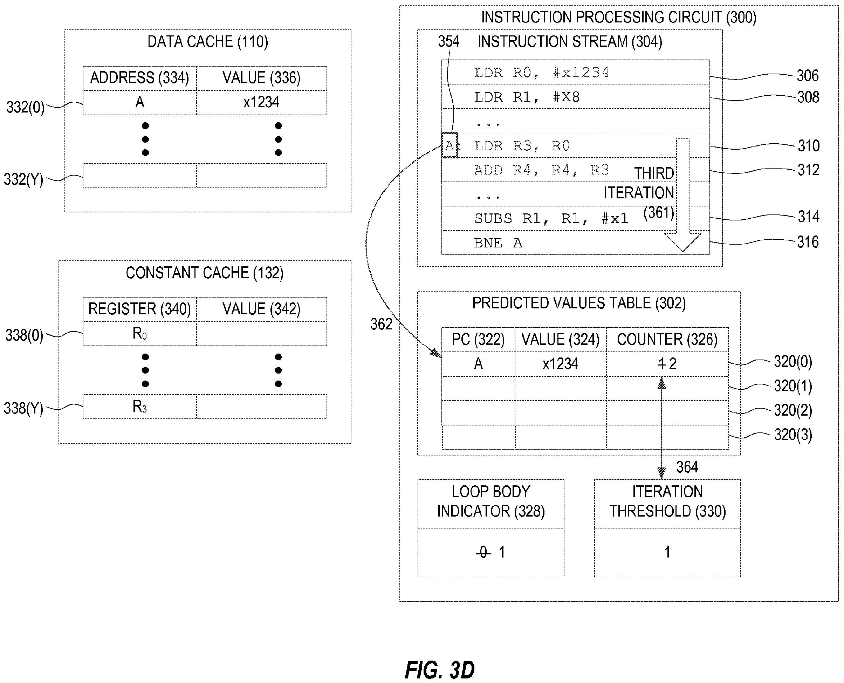

Figure 3D now illustrates the instruction processing circuit 300 executing a third iteration 361 of the loop body 318 of Figure 3A. Upon detecting the value-generating instruction 310, the instruction processing circuit 300 checks the prediction values table 302 to determine whether the attribute 354 is found in any of the entries 320(0)-320(3), as indicated by arrow 362. This time, the instruction processing circuit 300 locates the entry 320(0). The instruction processing circuit 300 then compares the value in the counter 326 of the entry 320(0) with the iteration threshold 330, as indicated by arrow 364, to determine whether the counter 326 exceeds the iteration threshold 330. Because the value of the counter 326 (1, at this point in the example of Figure 3D) does not exceed the value of the iteration threshold 330 (also 1), the instruction processing circuit 300 continues conventional processing of the value-generating instruction 310 as detailed above with respect to Figure 3C. As the value-generating instruction 310 generates the same hexadecimal value 1234, the instruction processing circuit 300 increments the counter 326 for the entry 320(0) to a value of two (2).

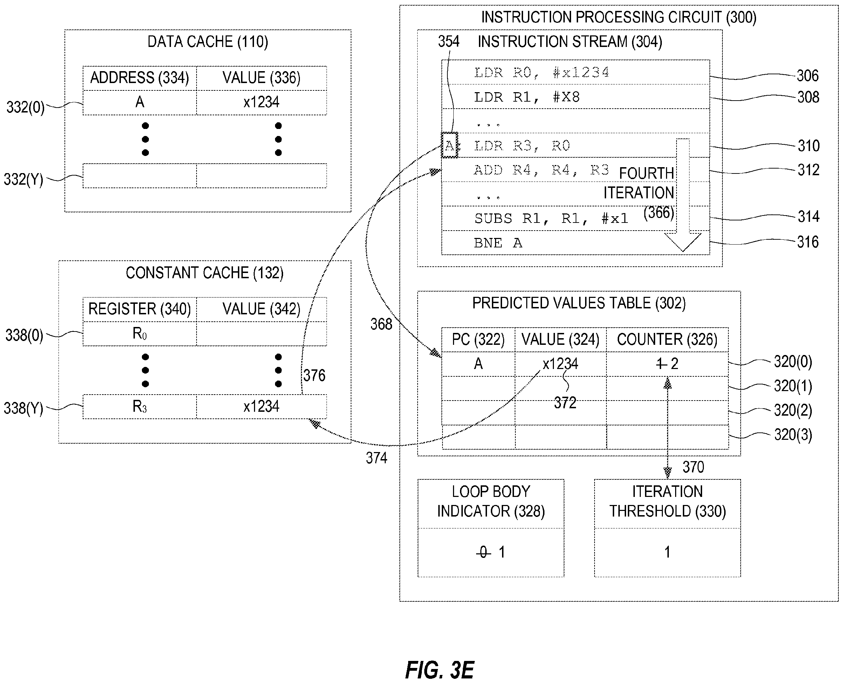

Turning now to Figure 3E, the instruction processing circuit 300 carries out a fourth iteration 366 of the loop body 318 of Figure 3A. As indicated by arrow 368, the instruction processing circuit 300 checks the prediction values table 302 to determine whether the attribute 354 of the value-generating instruction 310 is found in any of the entries 320(0)-320(3). The instruction processing circuit 300 locates the entry 320(0), and then compares the value in the counter 326 of the entry 320(0) with the iteration threshold 330, as indicated by arrow 370, to determine whether the counter 326 exceeds the iteration threshold 330. In Figure 3E, the value of the counter 326 (i.e., 2) exceeds the value of the iteration threshold (i.e., 1). In response, the instruction processing circuit 300 provides the value field 324 of the entry 320(0) as a predicted value 372 to the dependent instruction 312. In the example of Figure 3E, the constant cache 132 provides the avenue by which the predicted value 372 is provided to the dependent instruction 312. As indicated by arrow 374, the predicted value 372 is copied into the value field 342 of the entry 338(Z) of the constant cache 132, which is associated with register R3. The constant cache 132 may then provide the predicted value 372 directly to the dependent instruction 312, as indicated by arrow 376.

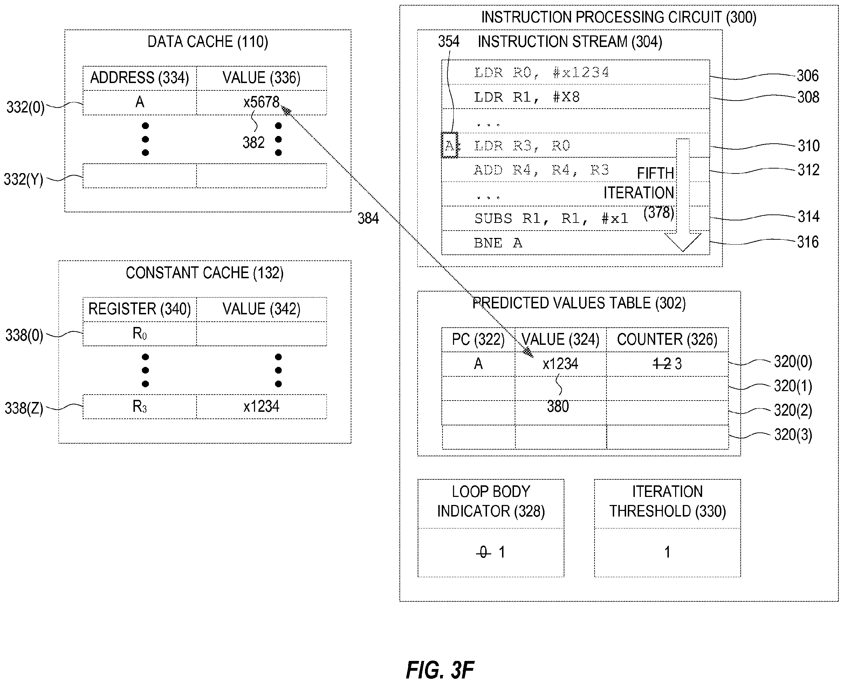

After execution of the value-generating instruction 310, the instruction processing circuit 300 may checks to ensure that an actual value generated by the value-generating instruction 310 matches a predicted value stored in the predicted values table 302. In this regard, Figure 3F is provided. In Figure 3F, it is assumed that an instruction within the loop body 318 of Figure 3A modified the value in register R0. Thus, in a fifth iteration 378 of the loop body 318, the value-generating instruction 310 generates a different result (here, the hexadecimal value 5678) than in previous iterations. The instruction processing circuit 300 locates and provides the predicted value 380 in the entry 320(0) of the predicted values table 302 to the dependent instruction 312 as described above. However, upon execution of the value-generating instruction 310, an actual value 382 is stored in the data cache 110. The instruction processing circuit 300 then compares the actual value 382 with the predicted value 380, as indicated by arrow 384. Because the values 382, 384 differ, the instruction processing circuit 300 invalidates the entry 320(0) in the predicted values table 302.

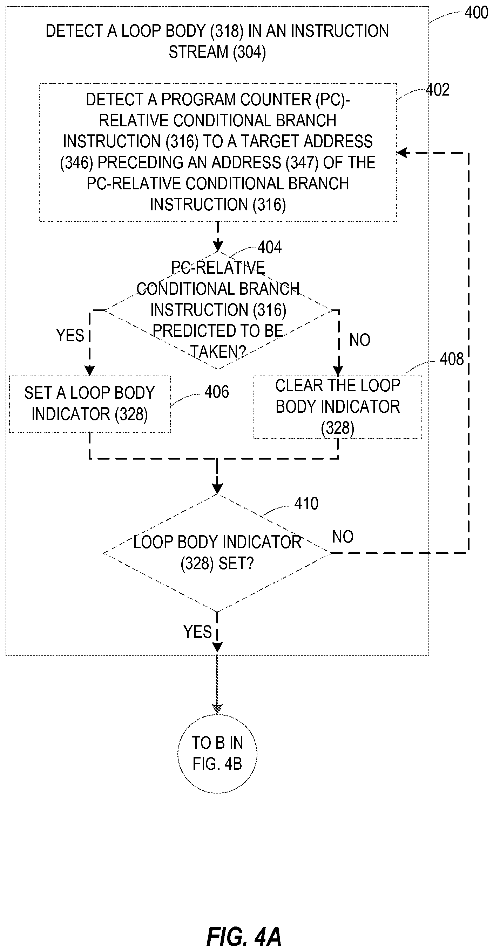

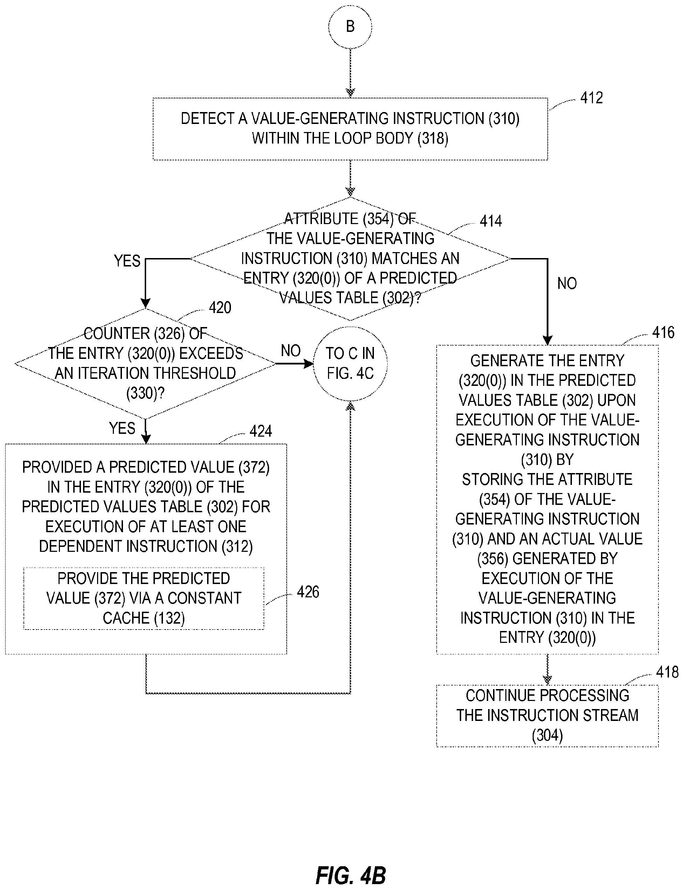

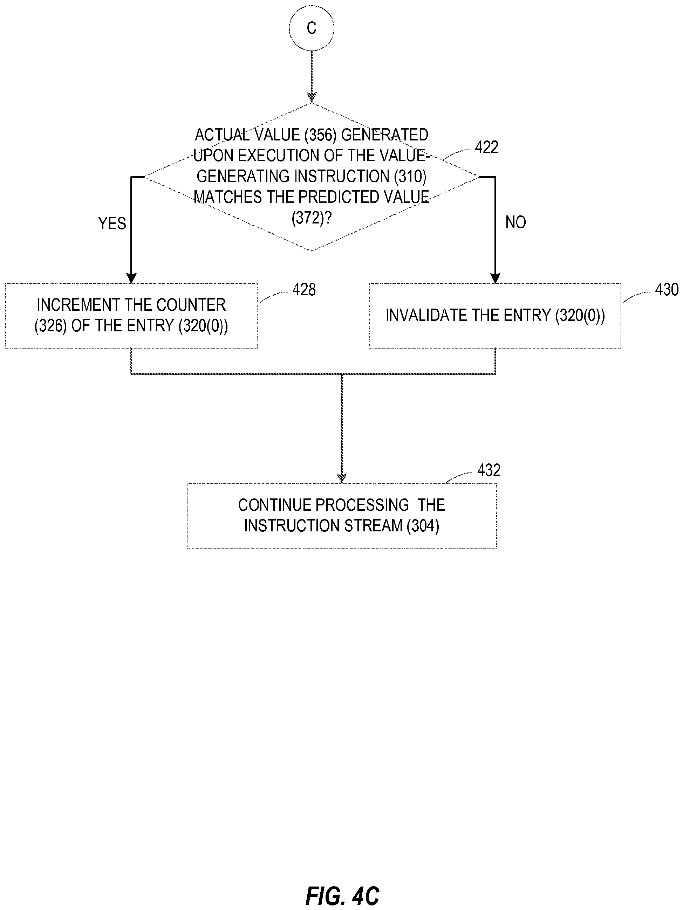

To illustrate exemplary operations for providing loop-invariant value prediction according to some aspects of the instruction processing circuit 102 and the predicted values table 104 of Figure 1, Figures 4A-4C are provided. Figure 4A is a flowchart illustrating exemplary operations for detecting a loop body, while Figure 4B is a flowchart illustrating exemplary operations for providing a predicted value and/or generating a new entry in a predicted values table. Figure 4C illustrates exemplary operations for incrementing and/or invalidating an entry in the predicted values table. For the sake of clarity, elements of Figures 1 and 3A-3F are referenced in describing Figures 4A-4C.

In Figure 4A, operations begin with the instruction processing circuit 300 detecting a loop body 318 in an instruction stream 304 (block 400). In some aspects, detecting the loop body 318 may include the instruction processing circuit 300 detecting a PC-relative conditional branch instruction 316 to a target address 346 preceding an address 347 of the PC-relative conditional branch instruction 316 (block 402). The instruction processing circuit 300 may determine whether the PC-relative conditional branch instruction 316 is predicted to be taken (block 404). If so, the instruction processing circuit 300 may set a loop body indicator 328 (block 406). Otherwise, the instruction processing 300 may clear the loop body indicator 328 (block 408). The instruction processing circuit 300 may then determine whether the loop body indicator 328 is set (block 410). If it is determined at block 410 that the loop body indicator 328 is not set, processing may resume at block 402. If the loop body indicator 328 is set, processing resumes at block 412 of Figure 4B.

Referring now to Figure 4B, the instruction processing circuit 300 detects a value-generating instruction 310 within the loop body 318 (block 412). The instruction processing circuit 300 next determines whether an attribute 354 of the value-generating instruction 310 matches an entry 320(0) of the predicted values table 302 (block 414). If not, the instruction processing circuit 300 generates the entry 320(0) in the predicted values table 302 upon execution of the value-generating instruction 310 (block 416). Generating the entry 320(0), in some aspects, may include storing the attribute 354 of the value-generating instruction 310 and an actual value 356 generated by execution of the value-generating instruction 310 in the entry 320(0). The instruction processing circuit 300 may then continue processing the instruction stream 304 (block 418).

If the instruction processing circuit 300 determines at decision block 414 that the attribute 354 of the value-generating instruction 310 matches the entry 320(0), the instruction processing circuit 300 then determines whether the counter 326 of the entry 320(0) exceeds the iteration threshold 330 (block 420). If not, then the instruction processing circuit 300 has not reached the required confidence level to provide a predicted value to a dependent instruction. Processing thus may resume at block 422 of Figure 4C. However, if the instruction processing circuit 300 determines at block 420 that the counter 326 of the entry 320(0) exceeds the iteration threshold 330, the instruction processing circuit 300 provides the predicted value 372 in the entry 320(0) of the predicted values table 302 for execution of at least one dependent instruction 312 (block 424). Some aspects of the instruction processing circuit 300 may provide the predicted value 372 via the constant cache 132 (block 426). Processing may then resume at block 422 of Figure 4C.

Turning now to Figure 4C, the instruction processing circuit 300 may next determine whether the actual value 356 generated upon execution of the value-generating instruction 310 matches the predicted value 372 (block 422). If the actual value 356 and the predicted value 372 match, the instruction processing circuit 300 increments the counter 326 of the entry 320(0) (block 428). In this manner, the counter 326 may serve as an indicia of confidence that the value-generating instruction 310 is loop-invariant. If the instruction processing circuit 300 determines at decision block 422 that the actual value 356 and the predicted value 372 do not match, the instruction processing circuit 300 may invalidate the entry 320(0) (block 430). The instruction processing circuit 300 then continues processing the instruction stream 304 as described above (block 432).

Providing loop-invariant value prediction using a predicted values table according to aspects disclosed herein may be provided in or integrated into any processor-based device. Examples, without limitation, include a set top box, an entertainment unit, a navigation device, a communications device, a fixed location data unit, a mobile location data unit, a mobile phone, a cellular phone, a computer, a portable computer, a desktop computer, a personal digital assistant (PDA), a monitor, a computer monitor, a television, a tuner, a radio, a satellite radio, a music player, a digital music player, a portable music player, a digital video player, a video player, a digital video disc (DVD) player, and a portable digital video player.

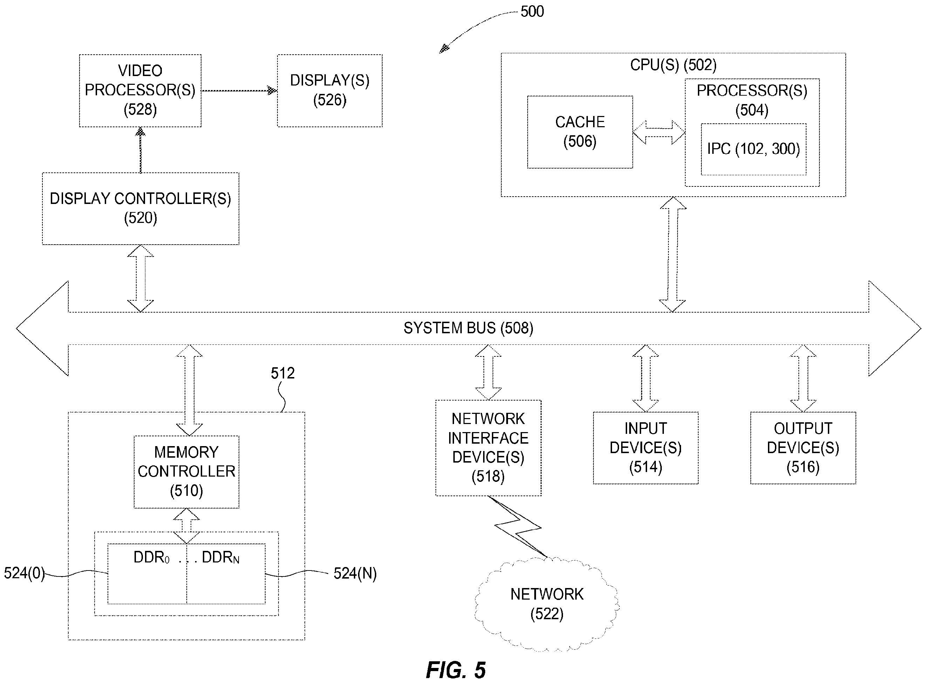

In this regard, Figure 5 illustrates an example of a processor-based system 500 that can employ the instruction processing circuit 102 of Figure 1. In this example, the processor-based system 500 includes one or more central processing units (CPUs) 502, each including one or more processors 504. The one or more processors 504 may include the instruction processing circuit (IPC) 102, 300 of Figures 1 and 3A-3G. The CPU(s) 502 may be a master device. The CPU(s) 502 may have cache memory 506 coupled to the processor(s) 504 for rapid access to temporarily stored data. The CPU(s) 502 is coupled to a system bus 508 and can intercouple master and slave devices included in the processor-based system 500. As is well known, the CPU(s) 502 communicates with these other devices by exchanging address, control, and data information over the system bus 508. For example, the CPU(s) 502 can communicate bus transaction requests to a memory controller 510 as an example of a slave device.

Other master and slave devices can be connected to the system bus 508. As illustrated in Figure 5, these devices can include a memory system 512, one or more input devices 514, one or more output devices 516, one or more network interface devices 518, and one or more display controllers 520, as examples. The input device(s) 514 can include any type of input device, including but not limited to input keys, switches, voice processors, etc. The output device(s) 516 can include any type of output device, including but not limited to audio, video, other visual indicators, etc. The network interface device(s) 518 can be any devices configured to allow exchange of data to and from a network 522. The network 522 can be any type of network, including but not limited to a wired or wireless network, a private or public network, a local area network (LAN), a wide local area network (WLAN), and the Internet. The network interface device(s) 518 can be configured to support any type of communications protocol desired. The memory system 512 can include the memory controller 510 and one or more memory units 524(0-N).

The CPU(s) 502 may also be configured to access the display controller(s) 520 over the system bus 508 to control information sent to one or more displays 526. The display controller(s) 520 sends information to the display(s) 526 to be displayed via one or more video processors 528, which process the information to be displayed into a format suitable for the display(s) 526. The display(s) 526 can include any type of display, including but not limited to a cathode ray tube (CRT), a liquid crystal display (LCD), a plasma display, etc.

Those of skill in the art will further appreciate that the various illustrative logical blocks, modules, circuits, and algorithms described in connection with the aspects disclosed herein may be implemented as electronic hardware, instructions stored in memory or in another computer-readable medium and executed by a processor or other processing device, or combinations of both. The master and slave devices described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a processor, a Digital Signal Processor (DSP), an Application Specific Integrated Circuit (ASIC), a Field Programmable Gate Array (FPGA) or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The aspects disclosed herein may be embodied in hardware and in instructions that are stored in hardware, and may reside, for example, in Random Access Memory (RAM), flash memory, Read Only Memory (ROM), Electrically Programmable ROM (EPROM), Electrically Erasable Programmable ROM (EEPROM), registers, a hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary aspects herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary aspects may be combined. It is to be understood that the operational steps illustrated in the flow chart diagrams may be subject to numerous different modifications as will be readily apparent to one of skill in the art. Those of skill in the art will also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples and designs described herein, but is to be accorded the widest scope consistent with the principles and novel features disclosed herein.

## Claims

1. An apparatus comprising an instruction processing circuit (102), configured to:
detect a loop body in an instruction stream;
detect a value-generating instruction within the loop body;
determine whether an attribute of the value-generating instruction matches an entry of a predicted values table (104); and
responsive to determining that the attribute of the value-generating instruction matches the entry of the predicted values table:
determine whether a counter of the entry exceeds an iteration threshold (136); and
responsive to determining that the counter of the entry exceeds the iteration threshold, provide a predicted value in the entry of the predicted values table for execution of at least one dependent instruction; and
responsive to determining that the counter of the entry does not exceed the iteration threshold:
determine, upon execution of the value-generating instruction, whether an actual value generated by the value-generating instruction matches the predicted value;
responsive to determining that the actual value matches the predicted value, increment the counter of the entry; and
responsive to determining that the actual value does not match the predicted value, invalidate the entry.

2. The apparatus of claim 1, wherein the instruction processing circuit is configured to detect the loop body by:
detecting a program-counter (PC)-relative branch instruction to a target address preceding an address of the PC-relative branch instruction;
determining whether the PC-relative branch instruction is predicted to be taken;
responsive to determining that the PC-relative branch instruction is predicted to be taken, setting a loop body indicator; and
responsive to determining that the PC-relative branch instruction is predicted to not be taken, clearing the loop body indicator;
the instruction processing circuit configured to detect the value-generating instruction responsive to the loop body indicator being set.

3. The apparatus of claim 1, wherein the instruction processing circuit is further configured to, responsive to determining that the attribute of the value-generating instruction does not match the entry of the predicted values table, generate the entry in the predicted values table upon execution of the value-generating instruction by storing the attribute of the value-generating instruction and an actual value generated by execution of the value-generating instruction in the entry.

4. The apparatus of claim 1, wherein the instruction processing circuit is communicatively coupled to a constant cache; and
the instruction processing circuit is configured to provide the predicted value in the entry of the predicted values table via the constant cache.

5. The apparatus of claim 1, wherein the attribute of the value-generating instruction comprises an address of the value-generating instruction.

6. The apparatus of claim 1 integrated into an integrated circuit (IC).

7. The apparatus of claim 1 integrated into a device selected from the group consisting of: a set top box; an entertainment unit; a navigation device; a communications device; a fixed location data unit; a mobile location data unit; a mobile phone; a cellular phone; a computer; a portable computer; a desktop computer; a personal digital assistant (PDA); a monitor; a computer monitor; a television; a tuner; a radio; a satellite radio; a music player; a digital music player; a portable music player; a digital video player; a video player; a digital video disc (DVD) player; and a portable digital video player.

8. A method for providing loop-invariant value prediction, comprising:
detecting a loop body in an instruction stream;
detecting a value-generating instruction within the loop body;
determining whether an attribute of the value-generating instruction matches an entry of a predicted values table (104); and
responsive to determining that the attribute of the value-generating instruction matches the entry of the predicted values table:
determining whether a counter of the entry exceeds an iteration threshold (136); and
responsive to determining that the counter of the entry exceeds the iteration threshold, providing a predicted value in the entry of the predicted values table for execution of at least one dependent instruction; and
responsive to determining that the counter of the entry does not exceed the iteration threshold:
determining, upon execution of the value-generating instruction, whether an actual value generated by the value-generating instruction matches the predicted value;
responsive to determining that the actual value matches the predicted value, incrementing the counter of the entry; and
responsive to determining that the actual value does not match the predicted value, invalidating the entry.

9. The method of claim 8, wherein detecting the loop body comprises:
detecting a program-counter (PC)-relative branch instruction to a target address preceding an address of the PC-relative conditional branch instruction;
determining whether the PC-relative branch instruction is predicted to be taken;
responsive to determining that the PC-relative branch instruction is predicted to be taken, setting a loop body indicator; and
responsive to determining that the PC-relative branch instruction is predicted to not be taken, clearing the loop body indicator;
the method comprising detecting the value-generating instruction responsive to the loop body indicator being set.

10. The method of claim 8, further comprising, responsive to determining that the counter of the entry does not exceed the iteration threshold:
determining, upon execution of the value-generating instruction, whether an actual value generated by the value-generating instruction matches the predicted value;
responsive to determining that the actual value matches the predicted value, incrementing the counter of the entry; and
responsive to determining that the actual value does not match the predicted value, invalidate the entry.

11. The method of claim 8, further configured to, responsive to determining that the attribute of the value-generating instruction does not match the entry of the predicted values table, generating the entry in the predicted values table upon execution of the value-generating instruction by storing the attribute of the value-generating instruction and an actual value generated by execution of the value-generating instruction in the entry.

12. The method of claim 8, wherein providing the predicted value in the entry of the predicted values table comprising providing the predicted value via a constant cache.

13. The method of claim 8, wherein the attribute of the value-generating instruction comprises an address of the value-generating instruction.

14. A non-transitory computer-readable medium having stored thereon computer-executable instructions, which when executed by an apparatus according to claim 1, cause the apparatus to:
detect a loop body in an instruction stream;
detect a value-generating instruction within the loop body;
determine whether an attribute of the value-generating instruction matches an entry of a predicted values table (104); and
responsive to determining that the attribute of the value-generating instruction matches the entry of the predicted values table:
determine whether a counter of the entry exceeds an iteration threshold (136); and
responsive to determining that the counter of the entry exceeds the iteration threshold, provide a predicted value in the entry of the predicted values table for execution of at least one dependent instruction; and
responsive to determining that the counter of the entry does not exceed the iteration threshold:
determine, upon execution of the value-generating instruction, whether an actual value generated by the value-generating instruction matches the predicted value;
responsive to determining that the actual value matches the predicted value, increment the counter of the entry; and
responsive to determining that the actual value does not match the predicted value, invalidate the entry.

## Patentansprüche

1. Eine Vorrichtung, die eine Befehlsverarbeitungsschaltung (102) aufweist, die konfiguriert ist zum:
Detektieren eines Schleifenhauptteils in einem Befehlsstrom;
Detektieren eines wertgenerierenden Befehls innerhalb des Schleifenhauptteils;
Bestimmen, ob ein Attribut des wertgenerierenden Befehls mit einem Eintrag einer Tabelle (104) vorhergesagter Werte übereinstimmt; und
ansprechend auf Bestimmen, dass das Attribut des wertgenerierenden Befehls mit dem Eintrag der Tabelle vorhergesagter Werte übereinstimmt:
Bestimmen, ob ein Zähler des Eintrags einen Iterationsschwellenwert (136) überschreitet; und
ansprechend auf Bestimmen, dass der Zähler des Eintrags den Iterationsschwellenwert überschreitet, Vorsehen eines vorhergesagten Wertes in dem Eintrag der Tabelle vorhergesagter Werte zur Ausführung wenigstens eines abhängigen Befehls; und
ansprechend auf Bestimmen, dass der Zähler des Eintrags den Iterationsschwellenwert nicht überschreitet:
Bestimmen, auf eine Ausführung des wertgenerierenden Befehls hin, ob ein tatsächlicher Wert, der durch den wertgenerierenden Befehl generiert wird, mit dem vorhergesagten Wert übereinstimmt;
ansprechend auf Bestimmen, dass der tatsächliche Wert mit dem vorhergesagten Wert übereinstimmt, Inkrementieren des Zählers des Eintrags; und
ansprechend auf Bestimmen, dass der tatsächliche Wert nicht mit dem vorhergesagten Wert übereinstimmt, Ungültigmachen des Eintrags.

2. Vorrichtung nach Anspruch 1, wobei die Befehlsverarbeitungsschaltung konfiguriert ist zum Detektieren des Schleifenhauptteils durch:
Detektieren eines Programmzähler- bzw. PC-relativen (PC = program-counter) Verzweigbefehls an eine Zieladresse, die einer Adresse des PC-relativen Verzweigbefehls vorausgeht;
Bestimmen, ob vorhergesagt wird, dass der PC-relative Verzweigbefehl gewählt wird;
ansprechend auf Bestimmen, dass vorhergesagt wird, dass der PC-relative Verzweigbefehl gewählt wird, Setzen eines Schleifenhauptteilindikators; und
ansprechend auf Bestimmen, dass vorhergesagt wird, dass der PC-relative Verzweigbefehl nicht gewählt wird, Löschen des Schleifenhauptteilindikators;
wobei die Befehlsverarbeitungsschaltung konfiguriert ist zum Detektieren des wertgenerierenden Befehls ansprechend darauf, dass der Schleifenhauptteilindikator gesetzt ist.

3. Vorrichtung nach Anspruch 1, wobei die Befehlsverarbeitungsschaltung weiter konfiguriert ist zum, ansprechend auf Bestimmen, dass das Attribut des wertgenerierenden Befehls nicht mit dem Eintrag der Tabelle vorhergesagter Werte übereinstimmt, Generieren des Eintrags in der Tabelle vorhergesagter Werte auf eine Ausführung des wertgenerierenden Befehls hin durch Speichern der Attribute des wertgenerierenden Befehls und eines tatsächlichen Wertes, der generiert wird durch Ausführung des wertgenerierenden Befehls in dem Eintrag.

4. Vorrichtung nach Anspruch 1, wobei die Befehlsverarbeitungsschaltung kommunikativ an einen Konstanten-Cache gekoppelt ist; und
die Befehlsverarbeitungsschaltung konfiguriert ist zum Vorsehen des vorhergesagten Wertes in dem Eintrag der Tabelle vorhergesagter Werte über den Konstanten-Cache.

5. Vorrichtung nach Anspruch 1, wobei das Attribut des wertgenerierenden Befehls eine Adresse des wertgenerierenden Befehls aufweist.

6. Vorrichtung nach Anspruch 1, die in einen integrierten Schaltkreis bzw. IC (IC = integrated circuit) integriert ist.

7. Vorrichtung nach Anspruch 1, die in eine Einrichtung integriert ist, die aus der Gruppe ausgewählt ist, die aus Folgendem besteht: einer Set-Top-Box; einer Unterhaltungseinheit; einer Navigationseinrichtung; einer Kommunikationseinrichtung; einer Dateneinheit mit festem Standort; einer Dateneinheit mit mobilem Standort; einem Mobiltelefon; einem Zellentelefon; einem Computer; einem tragbaren Computer; einem Desktop-Computer; einem persönlichen digitalen Assistenten bzw. PDA; einem Monitor; einem Computermonitor; einem Fernseher; einem Tuner; einem Radio bzw. Funkgerät; einem Satellitenradio bzw. Satellitenfunkgerät; einer Musikabspielvorrichtung; einer digitalen Musikabspielvorrichtung; einer tragbaren Musikabspielvorrichtung; einer digitalen Videoabspielvorrichtung; einer Videoabspielvorrichtung; einer DVD-Abspielvorrichtung (DVD = digital video disc) und einer tragbaren digitalen Videoabspielvorrichtung.

8. Ein Verfahren zum Vorsehen von schleifeninvarianter Wertvorhersage, das Folgendes aufweist:
Detektieren eines Schleifenhauptteils in einem Befehlsstrom;
Detektieren eines wertgenerierenden Befehls innerhalb des Schleifenhauptteils;
Bestimmen, ob ein Attribut des wertgenerierenden Befehls mit einem Eintrag einer Tabelle (104) vorhergesagter Werte übereinstimmt; und
ansprechend auf Bestimmen, dass das Attribut des wertgenerierenden Befehls mit dem Eintrag der Tabelle vorhergesagter Werte übereinstimmt:
Bestimmen, ob ein Zähler des Eintrags einen Iterationsschwellenwert (136) überschreitet; und
ansprechend auf Bestimmen, dass der Zähler des Eintrags den Iterationsschwellenwert überschreitet, Vorsehen eines vorhergesagten Wertes in dem Eintrag der Tabelle vorhergesagter Werte zur Ausführung wenigstens eines abhängigen Befehls; und
ansprechend auf Bestimmen, dass der Zähler des Eintrags den Iterationsschwellenwert nicht überschreitet:
Bestimmen, auf eine Ausführung des wertgenerierenden Befehls hin, ob ein tatsächlicher Wert, der durch den wertgenerierenden Befehl generiert wird, mit dem vorhergesagten Wert übereinstimmt;
ansprechend auf Bestimmen, dass der tatsächliche Wert mit dem vorhergesagten Wert übereinstimmt, Inkrementieren des Zählers des Eintrags; und
ansprechend auf Bestimmen, dass der tatsächliche Wert mit dem vorhergesagten Wert nicht übereinstimmt, Ungültigmachen des Eintrags.

9. Verfahren nach Anspruch 8, wobei das Detektieren des Schleifenhauptteils Folgendes aufweist:
Detektieren eines Programmzähler- bzw. PC-relativen (PC = program-counter) Verzweigbefehls an eine Zieladresse, die einer Adresse des PC-relativen konditionalen Verzweigbefehls vorausgeht;
Bestimmen, ob vorhergesagt wird, dass der PC-relative Verzweigbefehl gewählt wird,
ansprechend auf Bestimmen, das vorhergesagt wird, dass der PC-relative Verzweigbefehl gewählt wird, Setzen eines Schleifenhauptteilindikators; und
ansprechend auf Bestimmen, dass vorhergesagt wird, dass der PC-relative Bestimmen, ob vorhergesagt wird, dass der PC-relative Verzweigbefehl gewählt wird nicht gewählt wird, Löschen des Schleifenhauptteilsindikators;
wobei das Verfahren Detektieren des wertgenerierenden Befehls ansprechend darauf, dass der Schleifenhauptteilindikator gesetzt ist, aufweist.

10. Verfahren nach Anspruch 8, das weiter, ansprechend auf Bestimmen, dass der Zähler des Eintrags den Iterationsschwellenwert nicht überschreitet, Folgendes aufweist:
Bestimmen, auf eine Ausführung des wertgenerierenden Befehls hin, ob ein tatsächlicher Wert, der durch den wertgenerierenden Befehl generiert wird, mit dem vorhergesagten Wert übereinstimmt;
ansprechend auf Bestimmen, dass der tatsächliche Wert mit dem vorhergesagten Wert übereinstimmt, Inkrementieren des Zählers des Eintrags; und
ansprechend auf Bestimmen, dass der tatsächliche Wert mit dem vorhergesagten Wert nicht übereinstimmt, Ungültigmachen des Eintrags.

11. Verfahren nach Anspruch 8, das weiter konfiguriert ist zum, ansprechend auf Bestimmen, dass das Attribut des wertgenerierenden Befehls nicht mit dem Eintrag der Tabelle vorhergesagter Werte übereinstimmt, Generieren des Eintrags in der Tabelle vorhergesagter Werte auf eine Ausführung des wertgenerierenden Befehls hin durch Speichern des Attributs des wertgenerierenden Befehls und eines tatsächlichen Wertes, der generiert wird durch Ausführung des wertgenerierenden Befehls in dem Eintrag.

12. Verfahren nach Anspruch 8, wobei das Vorsehen des vorhergesagten Wertes in dem Eintrag der Tabelle vorhergesagter Werte Vorsehen des vorhergesagten Wertes über einen Konstanten-Cache aufweist.

13. Verfahren nach Anspruch 8, wobei das Attribut des wertgenerierenden Befehls eine Adresse des wertgenerierenden Befehls aufweist.

14. Ein nicht transitorisches computerlesbares Medium, mit darauf gespeicherten von einem Computer ausführbaren Instruktionen, die, wenn sie durch eine Vorrichtung gemäß Anspruch 1 ausgeführt werden, die Vorrichtung veranlassen zum:
Detektieren eines Schleifenhauptteils in einem Befehlsstrom;
Detektieren eines wertgenerierenden Befehls innerhalb des Schleifenhauptteils;
Bestimmen, ob ein Attribut des wertgenerierenden Befehls mit einem Eintrag einer Tabelle (104) vorhergesagter Werte übereinstimmt; und
ansprechend auf Bestimmen, dass das Attribut des wertgenerierenden Befehls mit dem Eintrag der Tabelle vorhergesagter Werte übereinstimmt:
Bestimmen, ob ein Zähler des Eintrags einen Iterationsschwellenwert (136) überschreitet; und
ansprechend auf Bestimmen, dass der Zähler des Eintrags den Iterationsschwellenwert überschreitet, Vorsehen eines vorhergesagten Wertes in dem Eintrag der Tabelle vorhergesagter Werte zur Ausführung wenigstens eines abhängigen Befehls; und
ansprechend auf Bestimmen, dass der Zähler des Eintrags den Iterationsschwellenwert nicht überschreitet:
Bestimmen, auf eine Ausführung des wertgenerierenden Befehls hin, ob ein tatsächlicher Wert, der durch den wertgenerierenden Befehl generiert wird, mit dem vorhergesagten Wert übereinstimmt;
ansprechend auf Bestimmen, dass der tatsächliche Wert mit dem vorhergesagten Wert übereinstimmt, Inkrementieren des Zählers des Eintrags; und
ansprechend auf Bestimmen, dass der tatsächliche Wert nicht mit dem vorhergesagten Wert übereinstimmt, Ungültigmachen des Eintrags.

## Revendications

1. Appareil comprenant un circuit de traitement d'instructions (102), configuré pour :
détecter un corps de boucle dans un flux d'instructions ;
détecter une instruction de génération de valeur dans le corps de boucle ;
déterminer si un attribut de l'instruction de génération de valeur correspond à une entrée d'une table de valeurs prédites (104) ; et
en réponse à la détermination du fait que l'attribut de l'instruction de génération de valeur corresponde à l'entrée de la table de valeurs prédites :
la détermination du fait qu'un compteur d'entrées dépasse un seuil d'itérations (136) ; et
en réponse à la détermination du fait que le compteur d'entrées dépasse le seuil d'itérations, fournir une valeur prédite dans l'entrée de la table de valeurs prédites pour l'exécution d'au moins une instruction dépendante ; et
en réponse à la détermination du fait que le compteur d'entrées ne dépasse pas le seuil d'itérations :
déterminer, lors de l'exécution de l'instruction de génération de valeur, si une valeur réelle générée par l'instruction de génération de valeur correspond à la valeur prédite ;
en réponse à la détermination du fait que la valeur réelle correspond à la valeur prédite, augmenter le compteur d'entrées ; et
en réponse à la détermination du fait que la valeur réelle ne correspond pas à la valeur prédite, invalider l'entrée.

2. Appareil selon la revendication 1, dans lequel le circuit de traitement d'instructions est configuré pour détecter le corps de boucle en :
détectant une instruction de branchement relative à un compteur de programmes (PC) destinée à une adresse cible précédant une adresse de l'instruction de branchement relative au compteur de programmes ;
déterminant si l'instruction de branchement relative au compteur de programmes est prédite comme étant prise ;
en réponse à la détermination du fait que l'instruction de branchement relative au compteur de programmes soit prédite comme étant prise, en définissant un indicateur de corps de boucle ; et
en réponse à la détermination du fait que l'instruction de branchement relative au compteur de programmes soit prédite comme n'étant pas prise, en effaçant l'indicateur de corps de boucle ;
le circuit de traitement d'instructions étant configuré pour détecter l'instruction de génération de valeur en réponse à l'indicateur de corps de boucle défini.

3. Appareil selon la revendication 1, dans lequel le circuit de traitement d'instructions est en outre configuré pour, en réponse à la détermination du fait que l'attribut de l'instruction de génération de valeur ne corresponde pas à l'entrée de la table de valeurs prédites, générer l'entrée dans la table de valeurs prédites lors de l'exécution de l'instruction de génération de valeur en stockant l'attribut de l'instruction de génération de valeur et une valeur réelle générée par l'exécution de l'instruction de génération de valeur dans l'entrée.

4. Appareil selon la revendication 1, dans lequel le circuit de traitement d'instructions est relié en communication à une cache constante ; et
le circuit de traitement d'instructions est configuré pour fournir la valeur prédite dans l'entrée de la table de valeurs prédites via la cache constante.

5. Appareil selon la revendication 1, dans lequel l'attribut de l'instruction de génération de valeur comprend une adresse de l'instruction de génération de valeur.

6. Appareil selon la revendication 1 intégré à un circuit intégré (IC).

7. Appareil selon la revendication 1 intégré à un dispositif choisi parmi le groupe consistant en : un boîtier décodeur ; une unité de jeux ; un dispositif de navigation ; un dispositif de communication ; une unité de données à emplacement fixe ; une unité de données à emplacement mobile ; un téléphone mobile ; un téléphone cellulaire ; un ordinateur portable ; un ordinateur de bureau ; un assistant personnel numérique (PDA) ; un écran ; un écran d'ordinateur ; un téléviseur ; un tuner ; une radio ; une radio satellite ; un lecteur de musique ; un lecteur de musique numérique ; un lecteur de musique portable ; un lecteur vidéo numérique ; un lecteur de disques vidéo numérique (DVD) ; et un lecteur de vidéos numérique portable.

8. Procédé de prédiction de valeur invariante de boucle, comprenant :
la détection d'un corps de boucle dans un flux d'instructions ;
la détection d'une instruction de génération de valeur dans le corps de boucle ;
la détermination du fait qu'un attribut de l'instruction de génération de valeur corresponde à une entrée d'une table de valeurs prédites (104) ; et
en réponse à la détermination du fait que l'attribut de l'instruction de génération de valeur correspond à l'entrée de la table de valeurs prédites :
la détermination du fait qu'un compteur d'entrées dépasse un seuil d'itérations (136) ; et
en réponse à la détermination du fait que le compteur d'entrées dépasse le seuil d'itérations, le fait de fournir une valeur prédite dans l'entrée de la table de valeurs prédites pour l'exécution d'au moins une instruction dépendante ; et
en réponse à la détermination du fait que le compteur d'entrées ne dépasse pas le seuil d'itérations :
la détermination, lors de l'exécution de l'instruction de génération de valeur, du fait qu'une valeur réelle générée par l'instruction de génération de valeur corresponde à la valeur prédite ;
en réponse à la détermination du fait que la valeur réelle correspond à la valeur prédite, l'augmentation du compteur d'entrées ; et
en réponse à la détermination du fait que la valeur réelle ne correspond pas à la valeur prédite, l'invalidation de l'entrée.

9. Procédé selon la revendication 8, dans lequel la détection du corps de boucle comprend :
la détection d'une instruction de branchement relative à un compteur de programmes (PC) destinée à une adresse cible précédant une adresse de l'instruction de branchement relative au compteur de programmes ;
la détermination du fait que l'instruction de branchement relative au compteur de programmes soit prédite comme étant prise ;
en réponse à la détermination du fait que l'instruction de branchement relative au compteur de programmes soit prédite comme étant prise, la définition d'un indicateur de corps de boucle ; et
en réponse à la détermination du fait que l'instruction de branchement relative au compteur de programmes soit prédite comme n'étant pas prise, l'effacement de l'indicateur de corps de boucle ;
le procédé comprenant la détection de l'instruction de génération de valeur en réponse à l'indicateur de corps de boucle défini.

10. Procédé selon la revendication 8, comprenant en outre, en réponse à la détermination du fait que le compteur d'entrées ne dépasse pas le seuil d'itérations :
la détermination, lors de l'exécution de l'instruction de génération de valeur, du fait qu'une valeur réelle générée par l'instruction de génération de valeur corresponde à la valeur prédite ;
en réponse à la détermination du fait que la valeur réelle correspond à la valeur prédite, l'augmentation du compteur d'entrées ; et
en réponse à la détermination du fait que la valeur réelle ne correspond pas à la valeur prédite, l'invalidation de l'entrée.

11. Procédé selon la revendication 8, configuré en outre pour, en réponse à la détermination du fait que l'attribut de l'instruction de génération de valeur ne corresponde pas à l'entrée de la table de valeurs prédites, générer l'entrée dans la table de valeurs prédites lors de l'exécution de l'instruction de génération de valeur en stockant l'attribut de l'instruction de génération de valeur et une valeur réelle générée par l'exécution de l'instruction de génération de valeur dans l'entrée.

12. Procédé selon la revendication 8, dans lequel le fait de fournir la valeur prédite dans l'entrée de la table de valeurs prédites comprend le fait de fournir la valeur prédite via une cache constante.

13. Procédé selon la revendication 8, dans lequel l'attribut de l'instruction de génération de valeur comprend une adresse de l'instruction de génération de valeur.

14. Support non transitoire lisible par un ordinateur stockant des instructions exécutables par un ordinateur, qui, lorsqu'elles sont exécutées par un appareil selon la revendication 1, permettent à l'appareil de :
détecter un corps de boucle dans un flux d'instructions ;
détecter une instruction de génération de valeur dans le corps de boucle ;
déterminer si un attribut de l'instruction de génération de valeur correspond à une entrée d'une table de valeurs prédites (104) ; et
en réponse à la détermination du fait que l'attribut de l'instruction de génération de valeur corresponde à l'entrée de la table de valeurs prédites :
déterminer si un compteur d'entrées dépasse un seuil d'itérations (136) ; et
en réponse à la détermination du fait que le compteur d'entrées dépasse le seuil d'itérations, fournir une valeur prédite dans l'entrée de la table de valeurs prédites pour l'exécution d'au moins une instruction dépendante ; et
en réponse à la détermination du fait que le compteur d'entrées ne dépasse pas le seuil d'itérations :
déterminer, lors de l'exécution de l'instruction de génération de valeur, si une valeur réelle générée par l'instruction de génération de valeur correspond à la valeur prédite ;
en réponse à la détermination du fait que la valeur réelle corresponde à la valeur prédite, augmenter le compteur d'entrées ; et
en réponse à la détermination du fait que la valeur réelle ne corresponde pas à la valeur prédite, invalider l'entrée.
